(19) Europäisches Patentamt
European Patent Office
Office européen des brevets

(11) **EP 3 033 913 B1**

(12) **EUROPEAN PATENT SPECIFICATION**

(45) Date of publication and mention
of the grant of the patent:
**31.10.2018 Bulletin 2018/44**

(21) Application number: **14772460.3**

(22) Date of filing: **12.08.2014**

(51) Int Cl.:
*H04W 64/00* (2009.01)　　*G01S 5/02* (2010.01)
*G01S 5/10* (2006.01)

(86) International application number:
**PCT/SE2014/050933**

(87) International publication number:
**WO 2015/023224 (19.02.2015 Gazette 2015/07)**

(54) **POSITIONING IN A SHARED CELL**

POSITIONIERUNG IN EINER GEMEINSAMEN ZELLE

POSITIONNEMENT DANS UNE CELLULE PARTAGÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.08.2013 US 201361864967 P**

(43) Date of publication of application:
**22.06.2016 Bulletin 2016/25**

(73) Proprietor: **Telefonaktiebolaget LM Ericsson
(publ)**
**164 83 Stockholm (SE)**

(72) Inventors:
• **SIOMINA, Iana**
**S-183 30 Täby (SE)**
• **KAZMI, Muhammad**
**S-167 39 Bromma (SE)**

(74) Representative: **Ericsson
Patent Development
Torshamnsgatan 21-23
164 80 Stockholm (SE)**

(56) References cited:
**US-A1- 2011 105 144　US-A1- 2011 230 144
US-A1- 2012 231 809　US-A1- 2012 270 572
US-A1- 2014 176 366**

**Description**

TECHNICAL FIELD

The present application relates generally to method and apparatus in a wireless communication system, and specifically to method and apparatus associated with performing positioning measurements in a shared cell of the system.

BACKGROUND

The position of a target device in a wireless communication system is determined using one or more positioning measurements. Which particular node in the system performs these one or more positioning measurements depends at least in part on which particular positioning method is used for determining the target device's position. For example, the node that performs the one or more positioning measurements (referred to herein as the measuring node) can be the target device itself, a separate radio node (i.e., a standalone node), the serving and/or neighboring nodes of the target device, etc.

In Long Term Evolution (LTE) systems, for instance, the measuring node is the target device itself when the Observed Time Difference of Arrival (OTDOA) positioning method is used. When the OTDOA positioning method is used, the target device performs a set of Reference Signal Time Difference (RSTD) measurements on positioning reference signals (PRSs) received from different cells during so-called positioning occasions. The target device performs each RSTD measurement on PRS transmitted by a reference cell (e.g., a serving cell) and PRS transmitted from another cell (e.g., a neighboring cell). The target device distinguishes different PRS received from different cells because the PRS are transmitted based on different identities of the cells (e.g., different Physical Cell IDs, PCIs). For example, in approaches where a positioning node (e.g., E-SMLC) determines the target device's location rather than the target device itself determining its location, the target device reports the results of the set of RSTD measurements by indicating the identities of the cells on which each RSTD measurement was performed.

Shared cells introduce complexities to positioning. A shared cell is a type of downlink (DL) coordinated multi-point (CoMP) where multiple geographically separated transmission points (TPs) dynamically coordinate their transmission towards the target device. For example, a shared cell may include low power radio resource heads (RRHs) within a macro cell's coverage, where the transmission/reception points created by the RRHs have the same cell IDs as that of the macro cell. Regardless, the unique feature of a shared cell (at least in an LTE context) is that all TPs within the shared cell have the same physical cell ID (PCI). This, coupled with tight synchronization in terms of transmission timings between the TPs within a shared cell, enables the physical signals and channels transmitted from the TPs to be combined over the air. This combining increases the average received signal strength, leading to improved coverage of synchronization and control channels.

US 2011/0105144 A1 describe a method for defining positioning configuration in a wireless network in which some or all cells of the network are capable of wirelessly transmitting positioning reference signals (PRS) during positioning occasions. According to one embodiment US 2011/0105144 describe a mapping in a distributed antenna system between the physical cell identity (PCI) and a shift $\Delta_{PRS}$ corresponding to a transmit occasion indicator. Antennas with different antenna indexes, but same PCI, could have different $\Delta_{PRS}$.

SUMMARY

Although a shared cell improves the coverage of synchronization and control channels, positioning in such a shared cell proves complicated with conventional approaches. Because the shared cell's transmission points (TPs) share the same cell identity, the positioning signals transmitted by the TPs cannot be distinguished from one another based on cell identity. This means that a measuring node performing positioning measurements on the positioning signals will perceive the positioning signals as if they are received from the same cell and thereby the same location or site. The failure to recognize that the measuring node receives different positioning signals from different locations induces large positioning inaccuracy depending upon the size (e.g., radius) of the shared cell.

One or more embodiments herein improve positioning in a shared cell as compared to conventional approaches by transmitting/receiving different TPs' positioning signals during different positioning occasions offset in time. That is, rather than tightly synchronizing the positioning signal transmission/reception timings between the shared cell's TPs as with other types of signals in order to improve coverage, one or more embodiments herein intentionally offset the TPs' positioning signals in time. The one or more embodiments advantageously exploit this time offsetting, rather than cell identity, in order to distinguish between different TPs' positioning signals.

More particularly, one embodiment herein includes a method implemented by a measuring node in a wireless communication system. The method includes performing positioning measurements at the measuring node on positioning signals that the measuring node receives from geographically separated TPs of a shared cell during different respective positioning occasions offset in time. The positioning signals are based on the same cell identifier. The method also includes, at the measuring node, associating a result of each measurement with the cell identifier as well as information indicating the timing of each positioning occasion during which the measuring node received a respective positioning signal used for that measurement. The method further include performing positioning measurements at the measuring node on positioning signals that the measuring node receives from other geographically separated TPs (20) of the shared cell during positioning occasions that are not offset in time, when a distance and/or transmit time misalignment between said other TPs (20) is below a threshold. Finally, the method includes determining at the measuring node, or assisting another node in determining, a target device's position based on the results of the measurements and the association.

In some embodiments, this assisting comprises reporting to the another node the result of each measurement, as associated with the cell identifier and the information.

In one or more embodiments, the method also comprises receiving positioning assistance data indicating whether and/or which TPs in the shared cell are transmitting positioning signals based on the same cell identifier but during different positioning occasions offset in time.

In one or more embodiments, the method further comprises receiving positioning assistance data indicating the timing of the positioning occasions during which the positioning signals are to be received from the TPs. In this case, performing positioning measurements comprises performing the positioning measurements according to the positioning assistance data.

According to any of the above embodiments, each method may include deriving the timing of the positioning occasions from one or more predefines rules. In some embodiments, for instance, this entails deriving a starting time of at least one of said positioning occasions as being a predefined timing offset from a predefined reference time. Moreover, deriving this starting time may comprise deriving the predefined timing offset and/or the predefined reference time as a function of at least one of: (1) a number of TPs in the shared cell transmitting the positioning signals; and (2) periodicities of the positioning signals.

In any of the above embodiments, the wireless communication system may be an LTE system. In this case, positioning signals may be Positioning Reference Signals, PRS, the cell identifier may be a physical cell identifier, and positioning measurements performed on the positioning signals may be timing measurements.

In one or more LTE embodiments, these timing measurements are RSTD measurements or Rx-Tx measurements, and the timing of a positioning occasion is represented as a PRS configuration index or a PRS subframe offset.

Embodiments herein further include corresponding apparatus, computer programs, carriers, and computer program products.

Of course, the present invention is not limited to the above features and advantages. Indeed, those skilled in the art will recognize additional features and advantages upon reading the following detailed description, and upon viewing the accompanying drawings.

BRIEF DESCRIPTION OF THE DRAWINGS

Figure 1 is a block diagram of a wireless communication system according to one or more embodiments.

Figure 2 is a block diagram of a shared cell according to one or more embodiments.

Figure 3 is a logic flow diagram of a method implemented by a radio network node according to one or more embodiments.

Figure 4 illustrates an example of different positioning signals transmitted during different positioning occasions offset in time according to one or more embodiments.

Figure 5 is a logic flow diagram of a method implemented by a measuring node according to one or more embodiments.

Figure 6 illustrates an example for a measuring node associating a positioning measurement with information indicating the timing of positioning occasions according to one or more LTE embodiments.

Figure 7 is a logic flow diagram of a method implemented by a positioning node according to one or more embodiments.

Figure 8 is a logic flow diagram of a method implemented by a positioning node according to one or more other embodiments.

Figure 9 illustrates an example of some positioning signals being transmitted during different positioning occasions offset in time, but other positioning signals being transmitted during positioning occasions aligned in time, according to one or more embodiments.

Figure 10 is a block diagram of a LTE system according to some embodiments.

Figure 11 illustrates transmission of a positioning reference signal (PRS) according to one or more embodiments.

Figure 12 illustrates transmission of a positioning reference signal (PRS) during a positioning occasion according to one or more LTE embodiments.

Figure 13 is a block diagram of a shared cell according to some embodiments.

Figure 14 is a block diagram of a shared cell according to other embodiments.

Figure 15 illustrates an example of different PRS transmitted during different positioning occasions offset in time according to one or more LTE embodiments.

Figure 16 illustrates an example of some PRS being transmitted during different positioning occasions offset in time, but other PRS being transmitted during positioning occasions aligned in time, according to one or more LTE embodiments.

Figure 17 is a block diagram of a wireless communication device according to one or more embodiments.

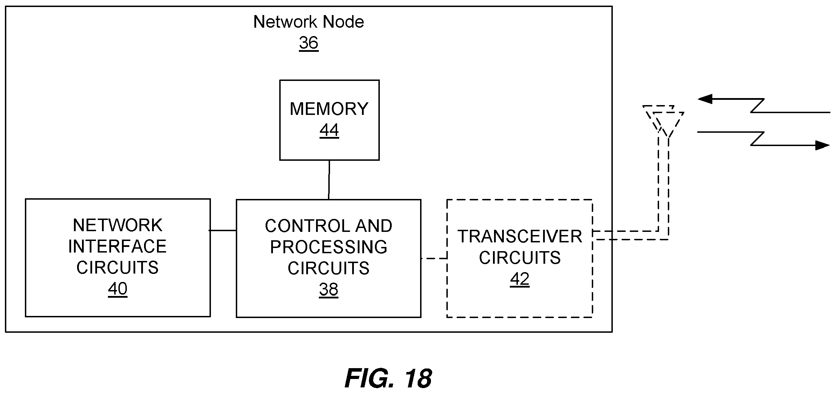

Figure 18 is a block diagram of a network node according to one or more embodiments.

DETAILED DESCRIPTION

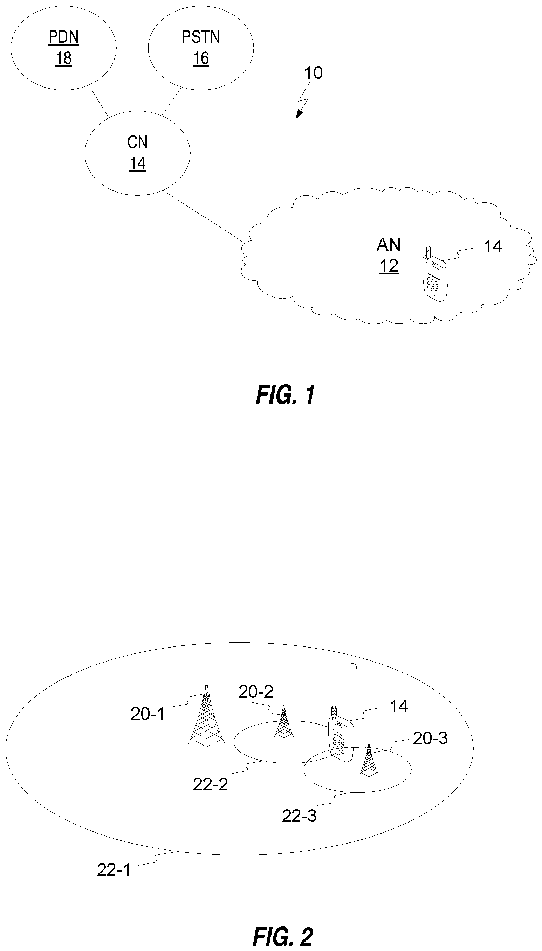

Figure 1 illustrates a wireless communication system 10 according to one or more embodiments. The system 10 includes a wireless access network 12 that provides one or more wireless communication devices 14 access to a core network 14. The core network 14 in turn enables the device(s) 14 to access one or more external networks, such as the Public Switched Telephone Network (PSTN) 16 or a packet data network (PDN) 18, e.g., the Internet.

The access network 12 includes a number of transmission points (TPs) 20-1, 20-2, 20-3, etc. as shown in Figure 2. Each TP 20 provides wireless coverage for one or more portions of the system's geographic area, referred to as cells 22. As shown in Figure 2, for instance, TP 20-1 provides coverage for cell 22-1, TP 20-2 provides coverage for cell 22-3, and TP 20-3 provides coverage for cell 22-3. The cells 22 provided by at least some geographically separated TPs 20 at least partially overlap in coverage. Moreover, these cells 22 are identified by the same identifier, e.g., at least at the physical layer (e.g., cell-id 1). A "shared cell" as used herein refers to the coverage area of such cells 22; that is, the coverage area of cells 22 that are provided by geographically separated TPs 20, that at least partially overlap in coverage, and that share the same cell identifier (at least at the physical layer) referred to herein as the shared cell's identifier.

Each TP 20 of the shared cell transmits positioning signals (e.g., Positioning Reference Signals, PRS). A positioning signal as used herein is specifically designed (e.g., with good signal quality) to be a signal on which the measuring node performs positioning measurements (e.g., Reference Signal Time Difference, RSTD, measurements). In some embodiments, a positioning signal is dedicated for such purpose. A positioning node uses these positioning measurements to determine the position of a target device. The measuring node, the positioning node, and/or the target device may be the same node or different nodes in the system 10. For example, the target device in some embodiments is a particular wireless device 14 that performs the positioning measurements itself so as to function as the measuring node; and the target device may determine its position itself or report the measurement results to a separate positioning node (e.g., an E-SMLC in an LTE system). Regardless, each TP 20 of the shared cell transmits positioning signals using the shared cell's identifier.

Notably, the different TPs 20 transmit and the measuring node receives the positioning signals during different positioning occasions offset in time. That is, rather than tightly synchronizing the positioning signal transmission/reception timings between the shared cell's TPs, one or more embodiments herein intentionally offset the TPs' positioning signals in time. The one or more embodiments advantageously exploit this time offsetting, rather than cell identity, in order to distinguish between different TPs' positioning signals.

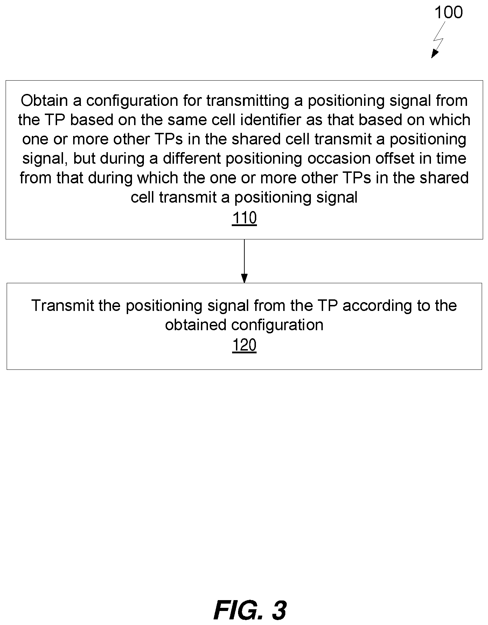

Some embodiments, for example, include the method 100 shown in Figure 3 as performed by a radio network node controlling a TP 20 in a shared cell. The method 100 entails the radio network node obtaining a configuration for transmitting a positioning signal from the TP 20 based on the same cell identifier as that based on which one or more other TPS 20 in the shared cell transmit a positioning signal, but during a different positioning occasion offset in time from that during which the one or more other TPs 20 in the shared cell transmit a positioning signal (Block 110). The method then entails transmitting the positioning signal from the TP 20 according to the obtained configuration (Block 120).

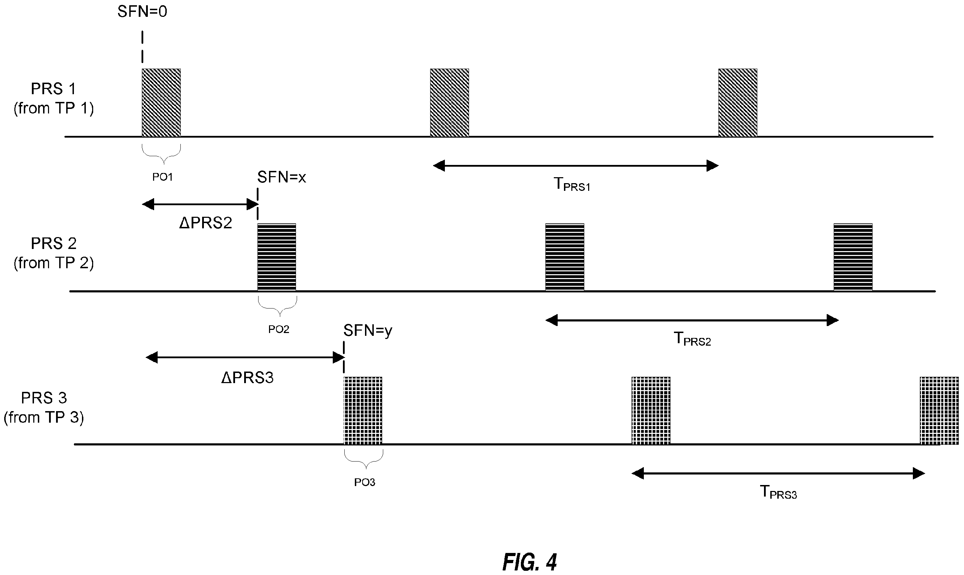

With different radio network nodes each controlling a different TP 20 in the shared cell according to Figure 3, the TPs 20 transmit positioning signals based on the same cell identifier but during different positioning occasions offset in time. Figure 4 shows an example of this in a context where positioning signals are Positioning Reference Signals (PRS) in a Long Term Evolution (LTE) system.

As illustrated in Figure 4, TP 1, TP 2, and TP 3 transmit positioning signals PRS 1, PRS 2, and PRS 3 based on the same cell identifier but during different positioning occasions PO1, PO2, and PO3 offset in time. TP 1 more particularly transmits PRS 1 during a positioning occasion PO1 that is aligned with subframe number (SFN) 0. By contrast, TP 2 transmits PRS 2 during a positioning occasion PO2 that is offset from SFN 0 by a PRS Subframe Offset ($\Delta$PRS2), with $\Delta$PRS2 = x subframes in this example. TP 3 transmits PRS 3 during a positioning occasion PO3 that is offset from SFN 0 by a PRS Subframe Offset ($\Delta$PRS3), with $\Delta$PRS3=y subframes in this example. And the TPs 1, 2, and 3 transmit PRS in this way with respective periodicities of $T_{PRS1}$, $T_{PRS2}$, and $T_{PRS3}$.

A radio network node in one or more embodiments obtains the configuration according to Figure 3 by receiving that configuration from another node (e.g., a positioning node), applying one or more predefined rules so as to derive the configuration, or otherwise determining the configuration. One example of a predefined rule in this regard may be that each TP derives the starting time of a positioning occasion from a predefined set of parameters which includes an absolute reference time (e.g., SFN = 0 or SFN = 512) and/or a time offset associated with that TP (e.g., a fixed number N of subframes). Another example of a predefined rule may dictate that the absolute reference time and/or the time offset, though predefined, depend upon or is derived from certain positioning signal parameters (e.g., positioning occasion, positioning signal periodicity, and/ radio operational parameters. Radio operational parameters in this regard include for instance TDD configurations (i.e., UL-DL sub-frames, special subframe configuration, etc.), half duplex configuration (i.e., proportion of UL-DL subframes in a frame), etc. In yet another example, a predefined rule may dictate that the absolute reference time and/or the time offset, though predefined, depend upon the shared cell's deployment configuration (e.g., the number of TPs in the shared cell transmitting positioning signals or whose positioning signal information is sent in assistance information to the measuring node as described more fully below).

Of course, any of the above-described exemplary predefined rules may be combined. For example, the time offset can be derived by using the positioning signal periodicity and the number of TPs 20 in the shared cell. For instance, if there are four TPs in the shared cell, the positioning signal periodicity is 1280 ms, and the reference time is defined with respect to the start of a positioning occasion in one of the TPs (e.g., TP 1), then the time offset according to one embodiment is 320 ms.

Although Figure 3 was described from the perspective of a radio network node configuring the timing of just its own TP's positioning signal transmission, the radio network node in some embodiments also effectively configures the timing of other TP's positioning signal transmission. In one embodiment, for example, the radio network node generates different configurations for different TPs 20 in the shared cell to transmit positioning signals based on the same cell identifier but during different positioning occasions offset in time. The radio network node then transmits the generated configurations to the different TPs 20. This sort of "centralized" configuration of the TPs positioning signal timing proves especially effective in for instance heterogeneous deployments where a macro or high-powered TP essentially controls lower-powered TPs in a shared cell.

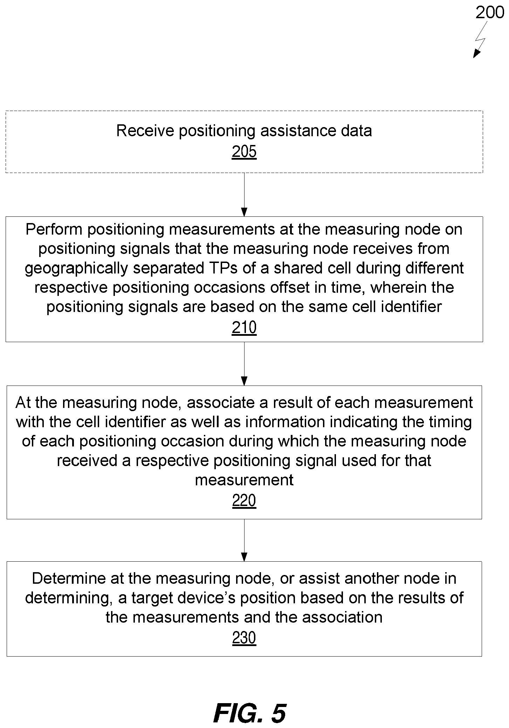

Regardless of whether the TPs 20 in the shared cell are centrally configured or distributively configured to transmit positioning signals during different positioning occasions offset in time, Figure 5 illustrates a complementary method 200 performed by the measuring node for performing positioning measurements on those signals. The method 200 entails performing positioning measurements at the measuring node on positioning signals that the measuring node receives from geographically separated TPs 20 of a shared cell during different respective positioning occasions offset in time (Block 210). The positioning signals are of course based on the same cell identifier (i.e., the cell identifier of the shared cell). The method 200 further includes, at the measuring node, associating (e.g., labeling or tagging) a result of each measurement with the cell identifier as well as information indicating the timing of each positioning occasion during which the measuring node received a respective positioning signal used for that measurement (Block 220). The method 200 also includes determining at the measuring node, or assisting another node in determining, a target device's position based on the results of the measurements and the association (Block 230). Where the measuring node simply assists another node in determining the target device's position (i.e., the measuring node is different than the positioning node), the measuring node may for instance report the result of each measurement, as associated with the cell identifier and the information, to the other node.

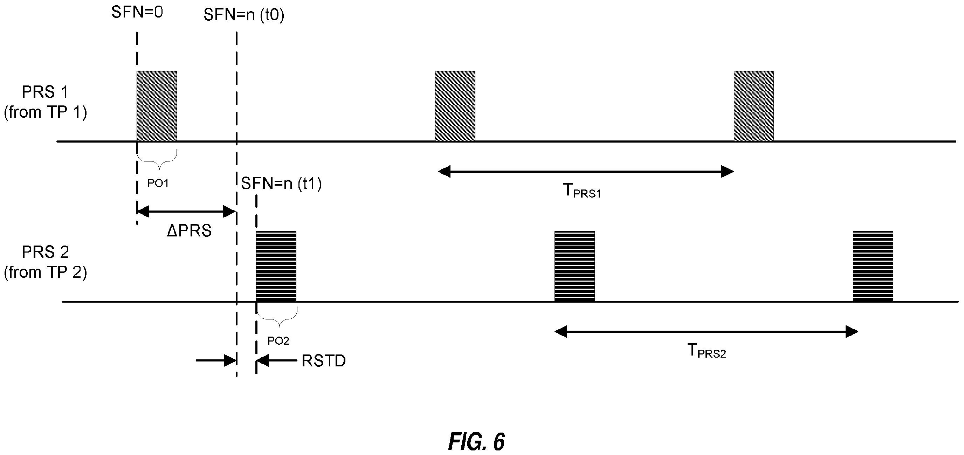

Consider an example in an LTE system where a positioning measurement is an RSTD measurement performed on a pair of two different Positioning Reference Signals (PRS). In this case, the measuring node associates the result of the RSTD measurement with information indicating the timing of the two different positioning occasions during which those two different PRS were received. Figure 6 shows this example in more detail.

As illustrated in Figure 6, the measuring node receives a pair of two different PRS, namely PRS 1 and PRS 2. The measuring node more particularly receives PRS 1 (from TP 1 of a shared cell) at a periodicity of $T_{PRS1}$ and receives PRS 2 (from TP 2 of the shared cell) at a periodicity of $T_{PRS2}$. For simplicity of illustration, the starting time of PRS 1 is aligned with subframe number (SFN) 0, and PRS 1 serves as the reference time. The starting time of PRS 2, though, is different than the starting time of PRS 1. Specifically, the starting time of PRS 2 is offset from SFN 0 by a PRS Subframe Offset ($\Delta$PRS), with $\Delta$PRS = n subframes in this example. But, due to different timings between TP 1 and TP 2, the subframe boundary timing with which the measuring node receives PRS 1 is different than the subframe boundary timing with which the measuring nodes receives PRS 2. Accordingly, although the timing with which the measuring node receives PRS 1 indicates that the measuring node should receive subframe n at a particular time t0, the timing with which the measuring node receives PRS 2 indicates that the measuring node should receive subframe n at a later time t1. The measuring node captures this relative timing difference between when PRS 1 and PRS 2 indicate that the measuring node should receive a particular subframe n by performing an RSTD measurement. More specifically, the measuring node measures the RSTD as the smallest time difference between two subframe boundaries indicated by PRS 1 and PRS 2: $T_{subframeRx1} - T_{subframeRx2}$, where $T_{subframeRx1}$ is the time when PRS 1 indicates the measuring node is to receive the start of subframe n and $T_{subframeRx2}$ is the time when PRS 2 indicates the measuring node is to receive the start of subframe n.

Having obtained the result of the RSTD measurement, the measuring node according to method 200 associates that result with the shared cell's identifier as well as information indicating the timing of the respective positioning occasions PO1 and PO2 during which PRS 1 and PRS 2 were received. In some embodiments, the measuring node represents the timing of each positioning occasion PO1 and PO2 with a time offset, such as a PRS Subframe Offset $\Delta$PRS. As shown in Figure 6's example, the measuring node in this case would represent the timing of positioning occasion PO1 with a PRS Subframe Offset of $\Delta PRS = 0$ subframes and would represent the timing of positioning occasion PO2 with a PRS Subframe Offset of $\Delta PRS = n$ subframes. In other embodiments, the measuring node represents the timing of each positioning occasion PO1 and PO2 with not only a time offset but also the reference time, which in this case is SFN 0. In still other embodiments, the measuring node represents the timing of each positioning occasion PO1 and PO2 with the actual starting time of those positioning occasions, such as with a particular SFN. In the example, for instance, the measuring node would represent the timing of positioning occasion PO1 with SFN 0 and would represent the timing of positioning occasion PO2 with SFN n. In yet other embodiments, the measuring node represents the timing of each positioning occasion PO1 and PO2 with a PRS Configuration Index $I_{PRs}$ value. This PRS Configuration Index value is a function of the PRS periodicity $T_{PRS}$ and the PRS Subframe Offset $\Delta PRS$.

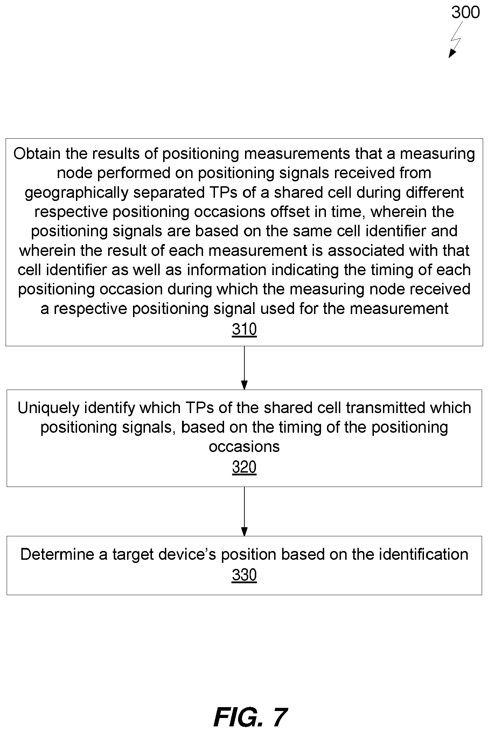

Irrespective of the particular way that the measuring node represents the timing of a positioning occasion, the measuring node's association advantageously enables the positioning node to distinguish the different positioning signals as being transmitted by different TPs 20. More particularly in this regard, the positioning node performs the method 300 shown in Figure 7 according to one or more embodiments.

As illustrated in Figure 7, the method 300 includes the positioning node obtaining the results of the positioning measurements that the measuring node performed as described above; that is, the measurements on positioning signals that the measuring node received from geographically separated TPs 20 of a shared cell during different respective positioning occasions offset in time (Block 310). Again, these positioning signals are based on the same cell identifier. The result of each measurement is associated with that cell identifier as well as information indicating the timing of each positioning occasion during which the measuring node received a respective positioning signal used for the measurement. In embodiments where the positioning node is a different node than the measuring node, the positioning node obtains the measurement results and the associating positioning occasion timing by receiving a report thereof from the measuring node.

Based on the timing of the positioning occasions, the method 300 further entails uniquely identifying which TPs 20 of the shared cell transmitted which positioning signals (Block 320). In some embodiments, for example, the positioning node compares the timing of the positioning occasions associated with the positioning measurement results with the timing of different TPs' 20 positioning occasions as known at the positioning node. That is, the positioning node knows when the different TPs 20 transmit positioning signals (e.g., because the positioning node itself derives the positioning signal timing from the predefined rules discussed above) and is therefore able to identify which TP 20 transmitted which positioning signal based on the positioning signal timing associated with the measurement results. In doing so, of course, the positioning node takes into account various sources of potential discrepancy between the timing derived from the predefined rule(s) and the actual timing received at the measuring node, such as propagation delay, synchronization errors, cable delays, etc.).

Regardless, the method 300 finally includes determining the target device's position based on the identification (Block 330). This may entail for instance determining the target device's position based on the positions of the TPs 20 identified as transmitting the measured positioning signals.

In some embodiments, the measuring node blindly detects the positioning signals and their associated timing. In other embodiments, though, the measuring node applies the same one or more predefined rules discussed above in order to derive expected positioning occasion timing. In this case, for example, the measuring node understands that different TPs 20 in a shared cell are transmitting positioning signals, and that those positioning signals are being transmitted during positioning occasions offset in time. The measuring node applies the one or more predefined rules to derive the timing with which positioning signals from different TPs 20 should be received, and then uses that derived timing to assist or otherwise guide the measuring node on when and how to perform the measurements. Where the measurements are timing measurements, for instance, the measuring node uses the derived timing to establish search windows around when the positioning signals are expected to be received from different TPs 20 and then searches within those windows to detect the timing with which the signals are actually received. In this way, the measuring node identifies different signals received during the different positioning occasions as actually being different positioning signals on which it is to perform a positioning measurement, as opposed to for instance those signals being different paths of the same positioning signal; that is, the measuring node distinguishes different signals on which it is to perform a positioning measurement based on the derived positioning occasion timing, since those signals are not otherwise distinguishable from one another.

Alternatively or additionally to itself deriving the positioning occasion timing from one or more predefined rules, the measuring node in some embodiments receives positioning assistance data from a separate positioning node, as shown in step 205 of Figure 5. The positioning assistance data in some embodiments explicitly or implicitly indicates such timing (e.g., with time offsets, positioning signal configurations, etc. as described above).

In still other embodiments, the positioning assistance data does not itself indicate the positioning occasion timing. Rather, the assistance data just generally indicates *whether* different TPs 20 in a shared cell are transmitting positioning signals based on the same cell identifier but during different positioning occasions offset in time. The assistance data may indicate this explicitly or implicitly such as by simply indicating that the positioning signals are transmitted from a shared cell (whereby the measuring node understands that this shared cell scenario means that different TPs 20 of the shared cell are transmitting during different positioning occasions offset in time). Alternatively, the assistance data may further indicate which particular TPs are transmitting positioning signals during different positioning occasions offset in time (e.g., by indicating which positioning signals are transmitted by a high-powered node and which positioning signals are transmitted by low-powered nodes). In either case, prompted by the assistance data, the measuring node derives the positioning occasion timing from the one or more predefined rules or otherwise determines that timing.

In yet other embodiments, the positioning assistance data or the one or more predefined rules only indicate the timing of positioning occasions during which the measuring node is to receive different positioning signals, without more particularly indicating that those signals are received from different TPs 20 in a shared cell. In this case, the measuring node does not inherently understand that the different positioning signals on which it is performing positioning measurements are received from different TPs 20 in a shared cell; rather, the measuring node just "naively" performs the measurements according to the positioning occasion timing indicated in the assistance data or derived from the one or more predefined rules.

Of course, the positioning assistance data may further indicate other information useful for performing the positioning measurements. For example, the assistance data may also indicate the particular reference time to be used for the measurements and/or for determining the positioning occasion timing in conjunction with time offsets. This reference time may be an absolute reference time or a relative reference time (e.g., the starting time of one TP's positioning signal serves as a reference time for the starting time of other TPs' positioning signals).

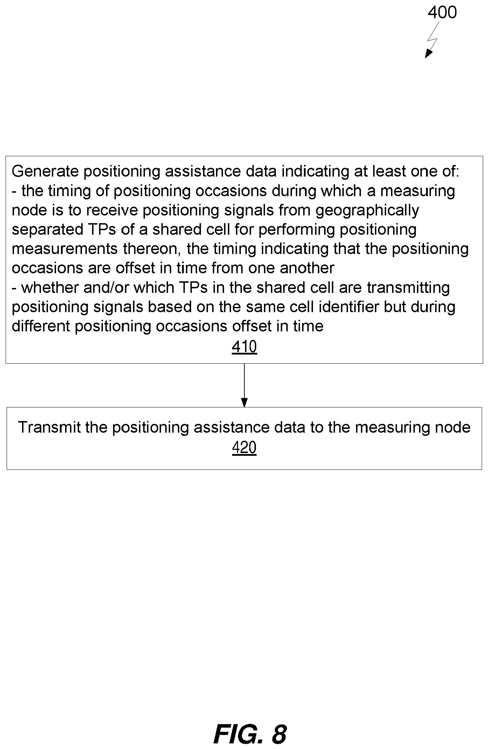

In view of the positioning assistance data embodiments just described, a positioning node herein correspondingly performs the method 400 shown in Figure 8 according to these embodiments. As illustrated, the method 400 includes the positioning node generating positioning assistance data indicating at least one of two things: (1) the timing of positioning occasions during which the measuring node is to receive positioning signals from geographically separated TPs 20 of a shared cell for performing positioning measurements thereon; and (2) whether and/or which TPs in the shared cell are transmitting positioning signals based on the same cell identifier but during different positioning occasions offset in time (Block 410). Of course, the positioning signals are based on the same cell identifier. The method 400 then finally includes transmitting the positioning assistance data to the measuring node (Block 420).

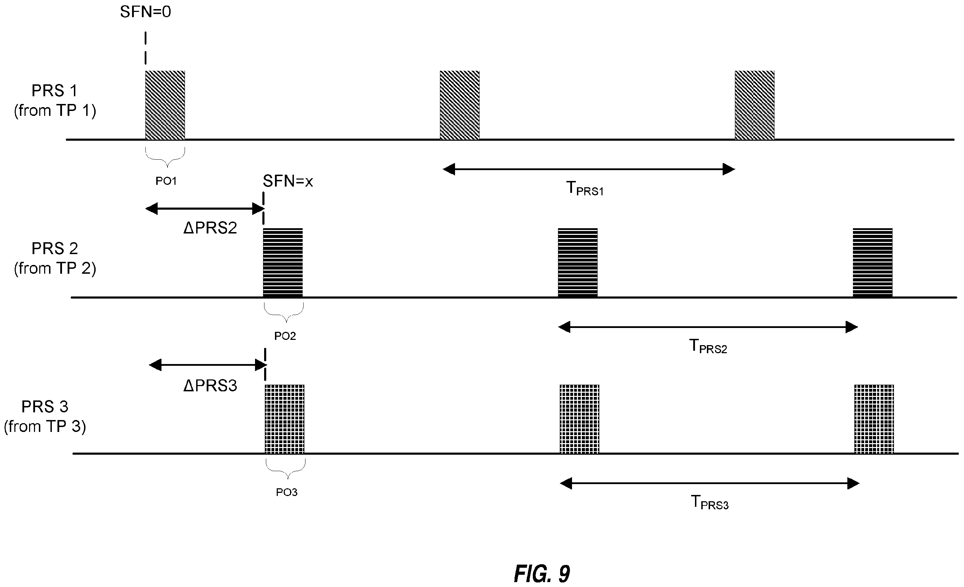

Although the above embodiments were described in many cases as if *all* TPs 20 in a shared cell transmit positioning signals during positioning occasions offset in time, such need not be the case. In some embodiments, for example, when a distance and/or transmit time misalignment (e.g., due to a configuration, transmission or processing delays, time misalignment error, etc.) between two TPs 20 in a shared cell is below a threshold, those TPs 20 transmit positioning signals during positioning occasions that are aligned in time (i.e., with a zero time offset). In this case, therefore, the measuring node receives time-offset positioning signals from some pairs of TPs 20 in a shared cell, but not other pairs of TPs 20. Figure 9 shows one example of this. Contrasted with Figure 4, a distance and/or transmit time misalignment between TP 2 and TP 3 in Figure 9 is below a defined threshold, meaning that their positioning occasions PO2 and PO3 are aligned in time, i.e., Positioning Subframe Offset $\Delta$PRS2 = $\Delta$PRS2 = x subframes. The threshold may be statically or dynamically set such that the time-alignment of the TPs' positioning signals does not introduce meaningful positioning inaccuracy. In any event, embodiments herein of course contemplate that positioning occasions are offset in time (i.e., the time offset is non-zero) for at least two TPs 20 in a shared cell.

Moreover, note that in at least some embodiments the time offset between positioning occasions from different TPs 20 in a shared cell must be greater than a defined threshold. This for example helps better differentiate the different TPs' positioning signals (e.g., so that are less likely to appear as different paths of the same positioning signal).

Still further, positioning measurements that the measuring node performs comprise any type of measurement used for determining the target device's position. In some embodiments, the measurements are timing measurements, such as RSTD measurements (e.g., performed as part of an Observed Time Difference of Arrival (OTDOA) positioning method), Rx-Tx measurements, timing advance (TA) measurements, etc. Timing measurements in this regard may involve for instance measuring timing differences between different positioning signals received from different TPs 20 of the shared cell (e.g., in order to determine timing differences between the different TPs 20 themselves, such as in terms of subframe boundary timing differences). The positioning measurement results may be specified with respect to a defined reference time.

The reference time used for determining positioning occasion timing and/or for specifying measurement results may be an absolute time or a relative time. An absolute time in one or more LTE embodiments for instance is a particular SFN, such as SFN = 0 or 512. This absolute time may be predefined or configurable by another node (e.g., by the positioning node). And the absolute time may be the time associated with the signals transmitted by any node or cell whose timing can be acquired by the measuring node or the cell or node that is predefined. Examples include the serving cell, the serving TP 20, a neighbor cell, a reference cell, etc. The serving cell may be the primary or secondary cell in a multi-carrier or carrier aggregation scenario, or the serving cell when performing intra-frequency or inter-frequency positioning measurements. The node or cell itself may be specific (e.g., reference cell) or its identity can be configured by the network at the measuring node.

In at least some embodiments, measurement length and/or accuracy requirements applicable to the positioning measurements are less stringent than they would otherwise be. That is, they are less stringent than the measurement length and/or accuracy requirements that apply when at least one of (i) the measuring node is not performing positioning measurements on a shared cell; and (ii) a transmit and/or receive time difference (e.g., due to propagation delay, distance, errors, etc.) between two or more TPs in the shared cell is below a threshold. The measurement length requirements may for instance be relaxed (e.g., so as to be longer) when the conditions (i) and/or (ii) are not met.

The embodiments above have not been described in the context of any particular type of wireless communication system (i.e., RAT), except for a few particular examples. In this regard, no particular communication interface standard is necessary for practicing embodiments herein. That is, the wireless communication system 10 may be any one of a number of standardized system implementations in which a measuring node can perform positioning measurements.

Nonetheless, as one particular example, the system 10 may implement LTE or LTE-based standards. The LTE architecture explicitly supports location services by defining the Evolved Serving Mobile Location Center (E-SMLC) that is connected to the core network (i.e. Mobility Management Entity (MME)) via the so called LCS-AP interface and the Gateway Mobile Location Center (GMLC) that is connected to the MME via the standardized Lg interface. The LTE system supports a range of methods to locate the position of the target devices (e.g. UEs) within the coverage area of the RAN. These methods differ in accuracy and availability. Typically, satellite based methods (Assisted GNSS) are accurate with a (few) meter(s) of resolution, but may not be available in indoor environments. On the other hand, Cell ID based methods are much less accurate, but have high availability. Therefore, LTE uses A-GPS as the primary method for positioning, while Cell-ID and OTDOA based schemes serve as fall-back methods.

In LTE, the positioning node (aka E-SMLC or location server) configures the target device (e.g. UE), eNode B, or a radio node dedicated for positioning measurements (e.g. LMU) to perform one or more positioning measurements depending upon the positioning method. The positioning measurements are used by the target device or by a measuring node or by the positioning node to determine the location of the target device. In LTE the positioning node communicates with UE using LTE positioning protocol (LPP) and with eNode B using LTE positioning protocol annex (LPPa).

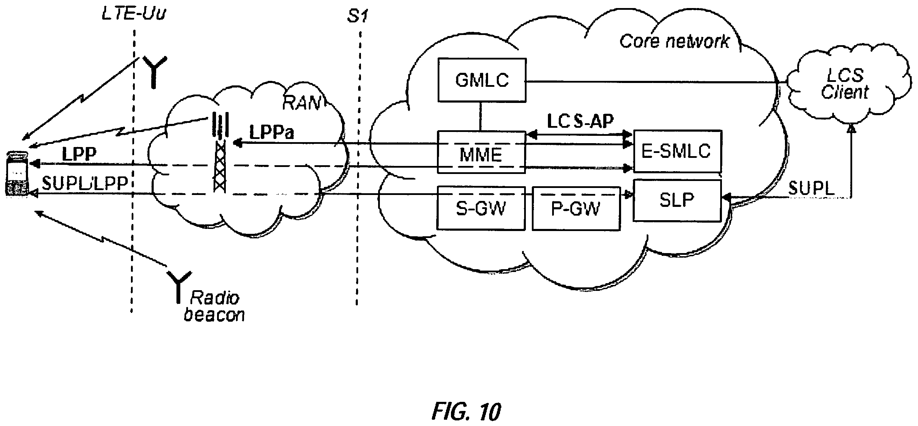

The LTE positioning architecture is shown in figure 10. The three key network elements in an LTE positioning architecture are the LCS Client, the LCS target, and the LCS Server. The LCS Server is a physical or logical entity managing positioning for a LCS target device by collecting measurements and other location information, assisting the terminal in measurements when necessary, and estimating the LCS target location. A LCS Client is a software and/or hardware entity that interacts with a LCS Server for the purpose of obtaining location information for one or more LCS targets, i.e. the entities being positioned. LCS Clients may also reside in the LCS targets themselves. An LCS Client sends a request to LCS Server to obtain location information, and LCS Server processes and serves the received requests and sends the positioning result and optionally a velocity estimate to the LCS Client. A positioning request can be originated from the terminal or a network node or external client.

Position calculation can be conducted, for example, by a positioning server (e.g. E-SMLC or SLP in LTE) or UE. The former approach corresponds to the UE-assisted positioning mode when it is based on UE measurements, whilst the latter corresponds to the UE-based positioning mode.

In LTE, the OTDOA method uses UE measurements related to time difference of arrival of signals from radio nodes for determining UE position. To speed up OTDOA measurements and also to improve their accuracy, the positioning server provides OTDOA assistance information to the target device. The OTDOA can also be UE based or UE assisted positioning method. In the former the target device determines its location itself whereas in the latter the positioning server (e.g. E-SMLC) uses the received OTDOA measurements from the target device to determine the location of the target device.

The LTE OTDOA UE measurement is performed on positioning reference signal (PRS). Each RSTD measurement is performed on PRS transmitted by a reference cell and PRS transmitted from a neighboring cell. To achieve sufficient positioning accuracy the RSTD measurements from multiple distinct pair of sites (reference and neighbor cells) are required.

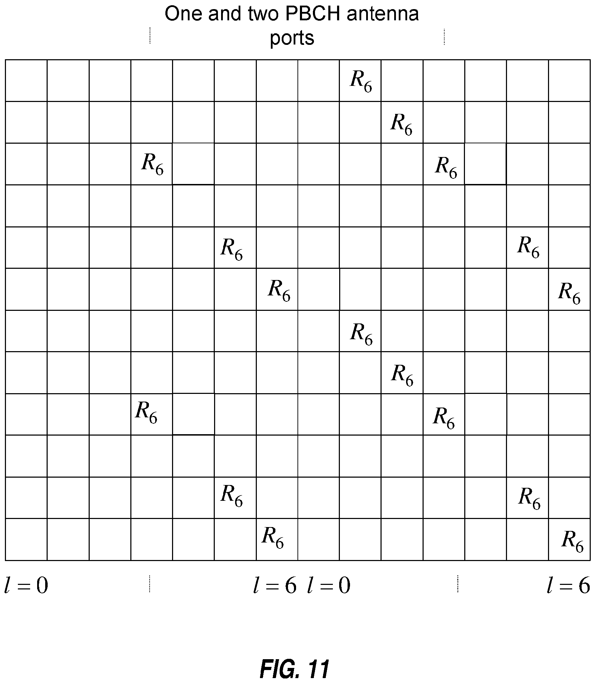

The PRS are transmitted from one antenna port (R6) according to a pre-defined pattern. An example of the PRS pattern used in LTE is shown in Figure 11, where the grey squares indicate PRS resource elements within a block of 12 subcarriers over 14 OFDM symbols (1 ms subframe with normal cyclic prefix). A set of frequency shifts can be applied to the pre-defined PRS patterns to obtain a set of orthogonal patterns which can be used in neighbor cells to reduce interference on PRS and thus improve positioning measurements. The effective frequency reuse of six can be modelled in this way. The frequency shift is defined as a function of Physical Cell ID (PCI) as follows,

$$v_{shift} = \mathrm{mod}(PCI, 6).$$

PRS can also be transmitted with zero power or muted or with reduced power.

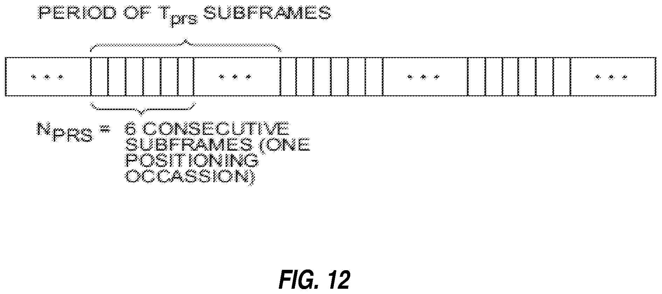

PRS are transmitted in pre-defined positioning subframes grouped by several consecutive subframes ($N_{PRS}$), i.e. one positioning occasion. Figure 12, for instance, shows an example where one positioning occasion includes PRS transmitted in $N_{PRS}$ = 6 consecutive sub-frames. Positioning occasions occur periodically with a certain periodicity of N subframes, i.e. the time interval between two positioning occasions. The periods N are 160, 320, 640, and 1280 ms, and the number of consecutive subframes $N_{PRS}$ can be 1, 2, 4, or 6.

To improve hearability of PRS, i.e. to allow for detecting PRS from multiple sites and at a reasonable quality, positioning subframes have been designed as low-interference subframes, i.e. it has also been agreed that no data transmissions are allowed in general in positioning subframes. This results in that in synchronous networks PRS are ideally interfered only by PRS from other cells having the same PRS pattern index (i.e. same vertical shift v_shift) and not by data transmissions.

A shared cell in this context is a type of downlink (DL) coordinated multi-point (CoMP) where multiple geographically separated transmission points (TPs) dynamically coordinate their transmission towards the UE. The unique feature of shared cell is that all transmission points within the shared cell have the same physical cell ID (PCI). This means UE cannot distinguish between the TPs by the virtue of the PCI decoding. The PCI is acquired during a measurement procedure e.g. cell identification etc.

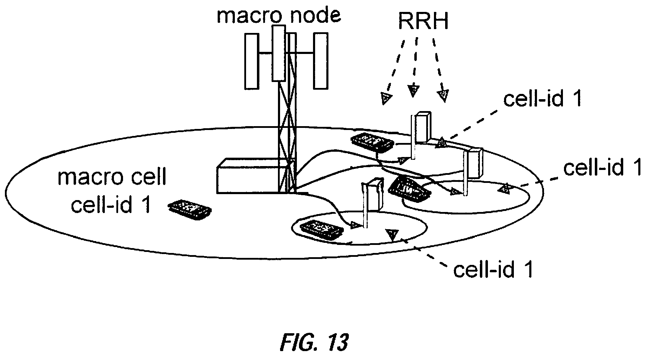

In typical deployment, a shared cell comprises of a heterogeneous network with low power RRHs within the macrocell coverage where the transmission/reception points created by the RRHs have the same cell IDs as that of the macro cell. In general a shared cell comprises of a set of low power nodes (LPN) and a serving high power node (HPN). This is shown in figure 13.

The shared cell approach can be implemented by distributing the same cell specific signals on all points (within the macro point coverage area). With such a strategy, the same physical signals such as primary synchronization signals (PSS), secondary synchronization signals (SSS), cell specific reference signals (CRS), positioning reference signal (PRS) etc and the same physical channels such as physical broadcast channel (PBCH), physical downlink shared channel (PDSCH) containing paging and system information blocks (SIBs), control channels (PDCCH, PCFICH, PHICH) etc are transmitted from each TP in the DL. Tight synchronization in terms of transmission timings between the TPs within a shared is used e.g. in order of ±100 ns between any pair of nodes. This enables the physical signals and channels transmitted from M points to be combined over air. The combining is similar to what is encountered in single-frequency networks (SFN) for broadcast. Due to the SFN effect, the average received signal strength on the UE side increases leading to improved coverage of the sync and control channels.

The maximum output power of a HPN can for example typically be between 43-49 dBm. Example of HPN is macro node (aka wide area base station). Examples of low power nodes are micro node (aka medium area base station), pico node (aka local area base station), femto node (home base station, or HBS), relay node etc. The maximum output power of a low power node for example typically is between 20-38 dBm depending upon the power class. For example a pico node typically has a maximum output power of 24 dBm whereas HBS has a maximum output power of 20 dBm.

The size of shared cell in terms of cell radius can vary from few hundred meters (e.g. 100-500 m) to few kilometers (e.g. 1-5 km).

The term shared cell is interchangeably used with other similar terms such as CoMP cluster with common cell ID, cluster cell with common cell ID, combined cell, RRH, RRU, distributed antenna system (DAS), heterogeneous network with shared cell ID, etc. Similarly the term transmission point is also interchangeably used with other similar terms such as radio nodes, radio network nodes, base station, radio units, remote antenna, etc. All of them bear the same meaning. For consistency the term shared cell which is also more generic is used herein. Furthermore the term transmission point (TP) for individual nodes within a shared cell is also used for consistency.

In a multi-carrier or carrier aggregation system, a carrier is generally termed as a component carrier (CC) or sometimes is also referred to a cell or serving cell. In principle each CC has multiple cells. The term carrier aggregation (CA) is also called (e.g. interchangeably called) "multi-carrier system", "multi-cell operation", "multi-carrier operation", "multi-carrier" transmission and/or reception. This means the CA is used for transmission of signaling and data in the uplink and downlink directions. One of the CCs is the primary component carrier (PCC) or simply primary carrier or even anchor carrier. The remaining ones are called secondary component carrier (SCC) or simply secondary carriers or even supplementary carriers. Generally the primary or anchor CC carries the essential UE specific signaling. The primary CC (aka PCC or PCell) exists in both uplink and downlink directions in CA. In case there is single UL CC the PCell is obviously on that CC. The network may assign different primary carriers to different UEs operating in the same sector or cell.

The multi-carrier operation may also be used in conjunction with multi-antenna transmission. For example signals on each CC may be transmitted by the eNB to the UE over two or more antennas.

The CCs in CA may or may not be co-located in the same site or base station or radio network node (e.g. relay, mobile relay etc). For instance the CCs may originate (i.e. transmitted / received) at different locations (e.g. from non-located BS or from BS and RRH or RRU). Examples of combined CA and multi-point communication are DAS, RRH, RRU, CoMP, multi-point transmission / reception etc. The embodiments herein also apply to multi-point carrier aggregation systems i.e. are applicable to each CC in CA or in CA combination with CoMP etc.

The PRS used for OTDOA RSTD measurements in LTE is associated with the physical cell ID of the radio node transmitting the PRS. This enables the UE to distinctly identify the radio nodes involved in RSTD measurements. But in a shared cell (aka RRH or CoMP), which comprises of more than one radio node with all radio nodes sharing the same cell ID, the UE cannot distinguish between the radio nodes within the shared cell. This will significantly deteriorate the positioning accuracy based on OTDOA RSTD measurements which uses PRS.

That is, embodiments herein recognize that, in a shared cell where all TPs operate with the same cell ID, the PRS configured on all these TPs will be transmitted also with the same cell ID. Therefore the UE will receive PRS from all these TPs as if they are received from one location or site. Therefore the UE-reported RSTD measurement which is common for the entire shared cell would not otherwise allow the receiving positioning node to distinguish between TPs within the shared cell. In other words the positioning determined based on this reported RSTD measurement would induce large positioning inaccuracy depending upon the size (e.g. radius) of the shared cell. For example if positioning node assumes the location of the HPN for determining UE location but the UE is reality closer to one of the LPN, then the positioning error would be at least larger than the distance between the HPN and LPN. Even if shared cell's radius is few hundred meters (500 m) the positioning error would be substantial. This would also prevent the network from meeting the regulatory requirements which require tight positioning accuracy under emergency call e.g. E911.

One or more embodiments solve this problem such that OTDOA positioning can work in shared cell without deteriorating the positioning accuracy compared to that in legacy deployment (i.e. non shared cell deployment). According to one or more embodiments herein, for example, in a shared cell with common cell ID the transmission occasions of PRS transmitted from different transmission points (TPs) are shifted with each other by a respect time offset, and the UE associates a positioning measurement (e.g. RSTD) with the cell ID and the time offsets of TPs on which the positioning measurement (e.g. RSTD) is measured, and use it for positioning tasks (e.g. determining location, reporting to positioning node etc).

More specifically, according to some embodiments, a method in a UE comprises performing a positioning measurement on PRS transmitted from different TPs in a shared cell with the same cell ID and wherein the PRS are shifted in time with respect to each other by a time offset; associating the performed positioning measurement with the cell ID of the shared cell and the at least determined time offsets of the corresponding TPs, wherein the association uniquely relates the TPs on whose signal the positioning measurement is performed by the UE; and using the measurement and the associated information for one or more positioning tasks (e.g. determining UE location, reporting measurements to positioning node).

According to some embodiments, a method in a network comprises configuring PRS transmitted from different TPs in a shared cell with the same cell ID such that PRS for at least two TPs in the same shared cell are shifted by a time offset, and transmitting PRS from at least two different TPs in the same shared cell according to the configuration.

Similarly, a method in a positioning node according to some embodiments comprises configuring a UE with an assistance data for performing a positioning measurement on PRS transmitted from different TPs in a shared cell with the same cell ID and wherein the PRS are shifted in time with respect to each other by a time offset. The method further comprises receiving from the UE the positioning measurement on the PRS transmitted by the TPs in a shared cell, wherein the received positioning measurement is associated with the cell ID of the shared cell and at least the time offsets or PRS configurations indicative of the time offsets of the corresponding TPs, wherein the association enables the positioning node to uniquely determining the TPs on whose signal the reported positioning measurement is performed by the UE.

Several embodiments are described in the following sections:

*General description* of *PRS transmission scheme in shared cell*

Embodiments in this section may be combined with other embodiments described in other sections.

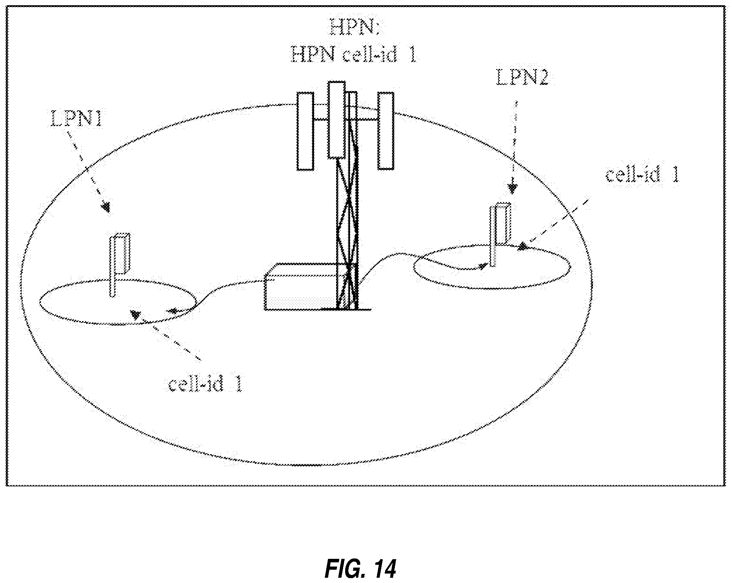

In general the shared cell may comprise of any number of nodes e.g. 1 HPN and 6 LPN nodes and so on. Therefore the embodiments are general enough to be applicable to any combination of nodes in a shared cell, where the term 'combination' may be characterized by node types (or deployment type) and/or applied PRS transmission scheme to a subset or all nodes in the shared cell. But for simplicity figure 14 shows an example of a shared cell comprising of three transmission nodes or more specifically transmission points: HPN, LPN1 and LPN2 associated with the same cell ID e.g. cell ID 1., where all the three nodes can transmit PRS according to the PRS transmission scheme described by the embodiments.

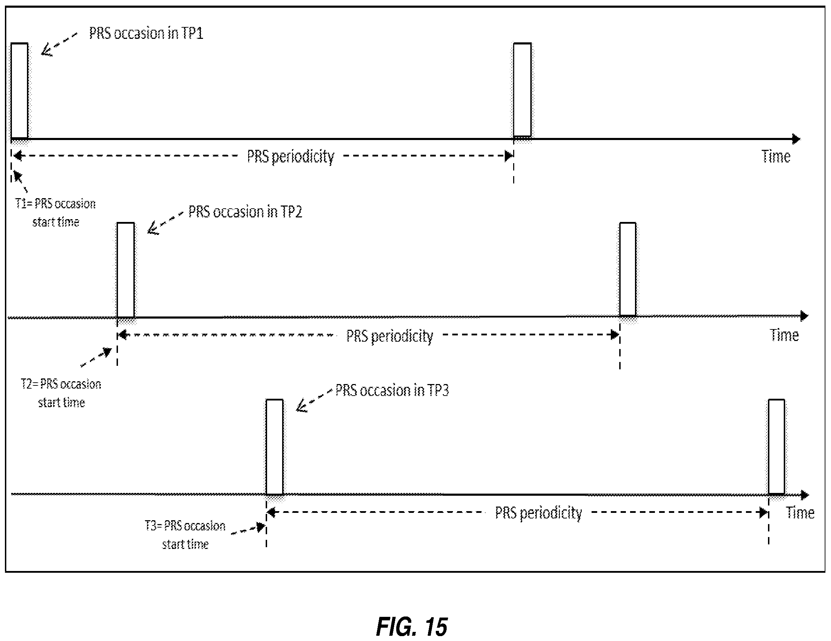

The PRS transmission scheme disclosed herein for a shared cell comprises of transmitting the PRS in TPs within the shared cell such that the PRS occasions in different TPs start at different times with respect to each other. Figure 15 illustrates such a PRS transmission scheme for shared cell comprising of 3 TPs. This scheme can be generalized for any number of TPs transmitting PRS in a shared cell.

As shown in figure 15, the PRS occasions in TP1, TP2 and TP3 start at different times namely at T1, T2 and T3 respectively. A reference time and a time offset $(\Delta_{ri})$ for each $TP_i$ with respect to the reference time can be pre-defined or configured by the positioning node at the UE. The reference time and the time offset can be used by the UE to determine the start of the PRS occasion in each TP.

In one example the reference time can be the time when PRS starts in certain designated TP e.g. in HPN. Assuming TP1 is the designated TP then the time offset $(\Delta_{11})$ for TP1 = 0 whereas time offset for TP2 = $\Delta_{12}$ and time offset for TP3 = $\Delta_{13}$. Therefore the PRS occasion starting time in TP1, TP2 and TP3 will be T1, T2 = T1+ $\Delta_{12}$ and T3 = T1+ $\Delta_{13}$ respectively.

In another example the reference time ($\Gamma$) can be any absolute time e.g. SFN = 0, which is pre-defined or configurable by another node (e.g. by the positioning node). Assuming the time offsets for TP1, TP2 and TP3 with respect to the reference time ($\Gamma$) are $\Delta_{r1}$, $\Delta_{r2}$ and $\Delta_{r3}$ respectively. Therefore the PRS starting time in TP1, TP2 and TP3 will be T1=$\Gamma$ $\Delta_{r1}$; T2 = $\Gamma$+ $\Delta_{r2}$ and T3 = $\Gamma$+ $\Delta_{r3}$ respectively.

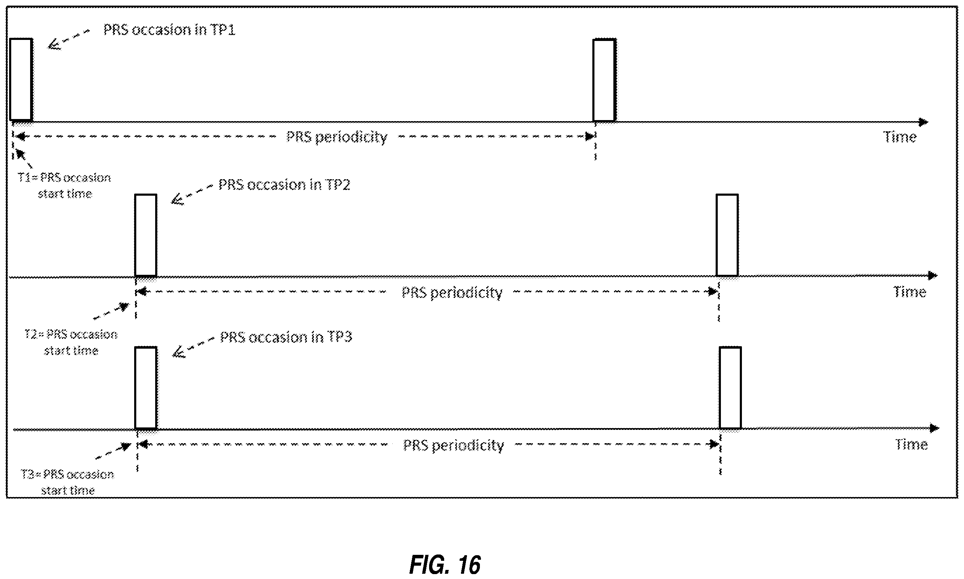

The offset may be positive, zero, or negative, but it is non-zero for at least two TPs in the shared cell. In one embodiment, the offset between PRS transmissions of two different TPs in a shared cell is non-zero when the distance between the two TPs is greater than a threshold; otherwise the offset may be zero (see Figure 16).

Method in positioning node of configuring UE with positioning measurements in shared cell

Embodiments in this section may be combined with other embodiments described in other sections.

According to one or more embodiments, the positioning node configures the UE by sending OTDOA assistance information for enabling it to perform positioning measurements on PRS transmitted by the TPs in the shared cell with the common cell ID. The OTDOA assistance information comprises of information transmitted in existing solutions and additional information disclosed herein to assist measurements in shared cell. The additional information comprises of at least: (1) Time offset with respect to a reference time for at least one TP in a shared cell, wherein time offset and reference time determines the starting time of the PRS occasion in a TP as described above, or (2) A second PRS configuration (determining when PRS is transmitted) associated with the same PCI, wherein the second PRS configuration is for at least one TP in a shared cell and it is different from a PRS configuration (e.g., different by a time offset when PRS are transmitted) of at least one other TP in the same shared cell, or (3) An indication of whether there are at least two TPs in a shared cell transmitting PRS with a time offset of each other.

The additional information may further comprise of one or more of: (1) Absolute reference time which when used with the time offset enables the UE to determine the PRS occasion starting time by the UE; (2) Indicating whether the starting time of the PRS in one of the TPs is used as a reference time for other TPs or not; (3) Indicating whether the UE associate the positioning measurement results with one or more of the additional information provided to the UE in assistance information or not; (4) Indicating that PRS are transmitted from a shared cell; or (5) Indicating which PRS (distinguished by their timing) are transmitted from HPN and which ones from LPN TPs in a shared cell.

Pre-defined rules associated with positioning measurements in shared cell

Embodiments in this section may be combined with other embodiments described in other sections.

One or more rules can also be pre-defined in the standard to assist UE for performing positioning measurements on PRS sent by TPs in a shared cell with common cell ID used in all TPs. The pre-defined rules can be associated how UE will distinctly determine PRS transmissions in different TPs with common cell ID and/or related to the timing information to be associated with the positioning measurement results. Examples of pre-defined rules include the following.

In one example it may be pre-defined that in shared cell the starting time of PRS occasion in each TP will be derived from a pre-defined set of parameters, which comprises of absolute reference time and/or time offset associated with each TP. For example absolute reference time can be SFN = 0 or SFN = 512. The time offset can be fixed number e.g. N subframes.

In another example the absolute reference time and/or time offset values can also be pre-defined but they may depend upon or may be derived from PRS parameters e.g. PRS occasion, PRS periodicity and/or radio operational parameters e.g. TDD configurations (i.e. UL-DL subframes, special subframe configuration etc), half duplex configuration (i.e. proportion of UL-DL subframes in a frame) etc.

In another example the absolute reference time and/or time offset values can also be pre-defined but they would depend upon shared cell deployment configuration e.g. number of TPs in a shared cell on which PRS are transmitted or whose PRS information is sent in assistance information to the UE.

In yet another example any of the above rules can be combined. For example the time offset can be derived by using the PRS periodicity and number of TPs.

For instance if there are 4 TPs, PRS periodicity is 1280 ms and reference time is with respect to start of PRS in one of the TPs (e.g. TP1), then time offset is 320 ms.

In any of the pre-defined rules or independently the reference time (e.g. SFN = 0 or 512 etc) can be the time associated with the signals transmitted by any node or cell whose timing can be acquired by the UE or the cell or node that is pre-defined. Examples are serving cell, serving TP, neighbor cell, reference cell etc. The serving cell can be PCell, SCell or serving cell when performing intra-frequency or inter-frequency positioning measurements. The node or cell itself can be specified (e.g. reference cell) or its identity can be configured by the network at the UE.

In another embodiment, it may be pre-defined that a zero offset may be used when the distance and/or transmit time misalignment (e.g., due to a configuration, transmission or processing delays, time alignment error, etc.) between the two TPs is below a threshold. It may further be pre-defined that otherwise the non-zero offset should be greater than a threshold.

It may also be specified that UE measurement requirements for a PRS-based timing measurement (e.g., RSTD measurement requirements or RSTD measurement accuracy requirements) apply and an additional condition that the transmit and/or receive time offset (e.g., due to propagation delay, configuration, time alignment error, cable delays, etc.) between two PRS transmissions within a shared cell is below a threshold.

In another embodiment, a different set of requirements, e.g., a longer measurement time for a PRS-based positioning timing measurement (such as RSTD), may apply when at least two TPs in a shared cell transmit PRS. In a further example, the longer measurement time associated with a shared cell may apply when the transmit and/or receive time difference (due to propagation delay, distance, errors, etc.) for the two TPs is above a threshold. In a yet further example, the measurement time may depend on the number of TPs transmitting PRS with an offset.

With such rules, a UE may adapt its measurement or reporting procedure accordingly, e.g., to decide whether or how to combine PRS transmitted from different TPs (the PRS are distinguished at least by an offset), how to report the measurement (e.g., to form two separate measurements, one for each TP; to provide additional information associated with the TP together with the measurement report).

<u>Method in UE of performing and associating positioning measurement in shared cell</u>

Embodiments in this section may be combined with other embodiments described in other sections.

The UE receives OTDOA assistance information from the positioning node for performing OTDOA positioning measurements (e.g. RSTD) on at least the PRS transmitted by TPs in a shared cell where the same cell ID is used in at least two or all these TPs. The OTDOA assistance information may also contain information for doing OTDOA positioning measurements on PRS transmitted by radio nodes using unique cell ID.

The PRS transmitted in shared cell ID employ the transmission scheme described above whereby the starting time of PRS occasion in different TPs are different within the shared cell. The UE determines the timing of the PRS transmission occasions in each of the TPs based on (1) Additional information in the OTDOA assistance information disclosed above and/or (2) One or more pre-defined rules disclosed above.

Upon determining the timing of the PRS transmission the UE performs the OTDOA positioning measurements on the PRS sent by the TPs in the shared cell. The UE after performing the measurements associate each measurement with the set of TPs on whose PRS the measurement is performed. The association for each OTDOA positioning measurement (e.g. RSTD) comprises of at least: (1) Cell ID of the shared cell and (2) Timing information of PRS transmitted from each TP whose PRS is used for the said positioning measurement.

Example of timing information associated with each TP comprises of one or more of the following: (1) Time offset of PRS start time of PRS transmitted in a TP; (2) Time offset and reference time for deriving starting time of PRS occasion in a TP; and (3) Starting time of PRS occasion of PRS transmitted in a TP.

The above timing related information is described in more detail other sections.

The above association enables the UE to uniquely keep track of each RSTD measurement and the associated TPs.

<u>Method in UE of using positioning measurement in shared cell for positioning tasks</u>

Embodiments in this section may be combined with other embodiments described in other sections. The UE after performing the OTDOA positioning measurement uses them to perform one or more positioning related tasks, which comprises of one or more of the following: (1) Determining the location of the UE e.g. using UE based OTDOA positioning method; (2) Signaling the OTDOA measurement results with the associated information described in section 3.4 to the positioning node; (3) Signaling the OTDOA measurement results with the associated information described above to the other UE which is capable of device to device communication; or (4) Signaling the OTDOA measurement results with the associated information described above to any other network node e.g. radio network nodes such as base station.

<u>Method in positioning node of using positioning measurement for positioning</u>

Embodiments in this section may be combined with other embodiments described in other sections.

The positioning node upon receiving the OTDOA positioning measurements results along with the associated information described above uses the associated information to uniquely determine the set of TPs on which a particular OTDOA positioning (e.g. RSTD measurement) has been performed by the UE. The determination can be done by comparing the reported associated information (i.e. PRS timing and cell ID) and the timing information of the PRS in different TPs and their cell ID available at the positioning node.

This in turn enables the positioning node to determine the location of the UE more accurately when the measurements are done on TPs in a shared cell ID.

Method in a radio network node

A method in a radio network node associated with a shared cell with two or more TPs comprising: obtaining (e.g., determining, applying a pre-defined configuration, or receiving the configuration from another node) PRS configuration for PRS to be transmitted with a non-zero offset for at least two TPs, and transmitting PRS according to the obtained PRS configuration.

The method may further comprise one or more of signaling the PRS configuration for at least the two TPs or the offset to another node, e.g., to a positioning node, another radio network node such as a base station, UE, etc.

Advantages of one or more embodiments herein are numerous. One or more embodiments herein for instance enable UE and positioning node to uniquely identify each radio node involved in OTDOA positioning measurement even if the PRS are transmitted with the same cell ID in all radio nodes. Moreover, the positioning accuracy can be significantly improved in a shared cell where same cell ID is used in TPs within the shared cell e.g. CoMP, RRH etc. Also, the regulatory requirements for emergency call can be met, and the network does not have to deploy special radio nodes to enable positioning in the vicinity of shared cell.

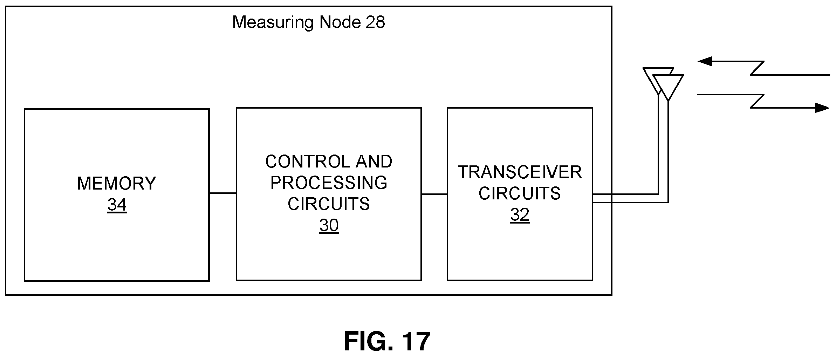

In view of the above described variations and modifications, those skilled in the art will appreciate that a wireless communication device 28 herein (e.g., which may be for instance a measuring node, a target device, and/or a positioning node) generally is configured according to the apparatus shown in Figure 17. As shown, the device 28 includes one or more processing circuits 30 configured to perform the functionality described above. The device 28 also includes one or more transceiver circuits 32 configured to both transmit and receive wireless signals. The one or more transceiver circuits 32, for example, includes various radio-frequency components (not shown) to receive and process radio signals from one or more radio network nodes, via one or more antennas, using known signal processing techniques.

The device 28 in some embodiments further comprises one or more memories 34 for storing software to be executed by, for example, the one or more processing circuits 30. The software comprises instructions to enable the one or more processing circuits 30 to perform the functionality described above. The memory 34 may be a hard disk, a magnetic storage medium, a portable computer diskette or disc, flash memory, random access memory (RAM) or the like. Furthermore, the memory 34 may be an internal register memory of a processor.

Those skilled in the art will also appreciate that a network node 36 herein (e.g., a radio network node, positioning node, etc.) generally is configured according to the apparatus shown in Figure 8. As shown, the node 36 includes one or more processing circuits 38 configured to perform the functionality described above. The node 36 also includes one or more network interface circuits 40 configured to communicatively connect the node 36 to one or more other nodes in the wireless communication system 10. In embodiments where the network node 36 is a radio node, the node 36 also includes one or more transceiver circuits 42 configured to both transmit and receive wireless signals. The one or more transceiver circuits 42, for example, includes various radio-frequency components (not shown) to receive and process radio signals from one or more wireless communication devices, via one or more antennas, using known signal processing techniques.

The node 36 in some embodiments further comprises one or more memories 44 for storing software to be executed by, for example, the one or more processing circuits 38. The software comprises instructions to enable the one or more processing circuits 38 to perform the functionality described above. The memory 44 may be a hard disk, a magnetic storage medium, a portable computer diskette or disc, flash memory, random access memory (RAM) or the like. Furthermore, the memory 44 may be an internal register memory of a processor.

Of course, not all of the steps of the techniques described herein are necessarily performed in a single microprocessor or even in a single module. Thus, a more generalized control circuit configured to carry out any of the operations described above may have a physical configuration corresponding directly to certain processing circuit(s) or may be embodied in two or more modules or units. The device or network node may for instance include different functional units, each configured to carry out a particular step of the method which it performs.

Those skilled in the art will also appreciate that embodiments herein further include a corresponding computer program for each disclosed method. The computer program comprises instructions which, when executed on at least one processor of a measuring node, radio network node, or positioning node, cause that node to carry out the corresponding processing described above. Embodiments further include a carrier containing such a computer program. This carrier may comprise one of an electronic signal, optical signal, radio signal, or computer readable storage medium. Those skilled in the art will appreciate that such a computer program according to some embodiments comprises one or more code modules contained in memory, each module configured to carry out a particular step of the executed method.

Those skilled in the art will also appreciate that the various "circuits" described may refer to a combination of analog and digital circuits, including one or more processors configured with software stored in memory and/or firmware stored in memory that, when executed by the one or more processors, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

Note that certain terminology has been used throughout this description. In particular, a wireless device and UE are used interchangeably in the description. A UE may comprise any device equipped with a radio interface and capable of at least generating and transmitting a radio signal to a radio network node. Note that even some radio network nodes, e.g., a relay, an LMU, or a femto BS (aka home BS), may also be equipped with a UE-like interface, e.g., transmitting in UL and receiving in DL. Some example of "UE" that are to be understood in a general sense are PDA, laptop, mobile, iPOD, iPAD, sensor, fixed relay, mobile relay, wireless device capable of device-to-device (D2D) communication, wireless device for short-range communication (e.g., Bluetooth), wireless device capable of machine-to-machine (M2M) communication (aka machine type communication), customer premise equipment (CPE) for fixed wireless access, any radio network node equipped with a UE-like interface (e.g., small RBS, eNodeB, femto BS, LMU).

A radio node is characterized by its ability to transmit and/or receive radio signals and it comprises at least a transmitting or receiving antenna, own or shared with another radio node. A radio node may be a UE or a radio network node. Some examples of radio nodes are a radio base station (e.g., eNodeB in LTE or NodeB in UTRAN), a relay, a mobile relay, remote radio unit (RRU), remote radio head (RRH), a sensor, a beacon device, a measurement unit (e.g., LMUs), user terminal, PDA, mobile, iPhone, laptop, etc. A radio node may be capable of operating or receiving radio signals or transmitting radio signals in one or more frequencies, and may operate in single-RAT, multi-RAT or multi-standard mode (e.g., an example dual-mode user equipment may operate with any one or combination of WiFi and LTE or HSPA and LTE/LTE-A; an example eNodeB may be a dual-mode or MSR BS).

A measuring node is a radio node performing signals on radio signals. Depending on the embodiments, the measuring node may perform measurements on DL signals (e.g., a wireless device or a radio network node equipped with a UE-like interface, relay, etc.) or UL signals (e.g., a radio network node in general, eNodeB, WLAN access point, LMU, etc.).

A radio network node is a radio node comprised in a radio access network, unlike user terminals or mobile phones. A radio network node e.g., including eNodeB, single- or multi-RAT BS, multi-standard BS, RRH, LMU, RRU, WiFi Access Point, or even transmitting-only/receiving-only nodes, may or may not create own cell and may comprise in some examples a transmitter and/or a receiver and/or one or more transmit antennas or one and/or more receive antennas, where the antennas are not necessarily co-located. It may also share a cell with another radio node which creates own cell. More than one cell may be associated with one radio node. Further, one or more serving cells (in DL and/or UL) may be configured for a UE, e.g., in a carrier aggregation system where a UE may have one Primary Cell (PCell) and one or more Secondary Cells (SCells). A radio network node may also comprise or be comprised in multi-antenna or distributed antenna system.

A network node may be any radio network node or core network node. Some nonlimiting examples of a network node are an eNodeB, RNC, positioning node, MME, PSAP, SON node, TCE, MDT node, (typically but not necessarily) coordinating node, a gateway node, and O&M node.

Positioning node described in different embodiments is a node with positioning functionality. For example, for LTE it may be understood as a positioning platform in the user plane (e.g., SLP in LTE) or a positioning node in the control plane (e.g., E-SMLC in LTE). SLP may also consist of SLC and SPC, where SPC may also have a proprietary interface with E-SMLC. Positioning functionality may also be split among two or more nodes, e.g., there may be a gateway node between LMUs and E-SMLC, where the gateway node may be a radio base station or another network node; in this case, the term "positioning node" may relate to E-SMLC and the gateway node. In some examples, positioning functionality may also fully or partly reside in a radio network node (e.g., RNC or eNB). In a testing environment, a positioning node may be simulated or emulated by test equipment.

The term "coordinating node" used herein is a network and/or node, which coordinates radio resources with one or more radio nodes. Some examples of the coordinating node are network monitoring and configuration node, OSS node, O&M, TCE, MDT node, SON node, positioning node, MME, a gateway node such as Packet Data Network Gateway (P-GW) or Serving Gateway (S-GW) network node or femto gateway node, a macro node coordinating smaller radio nodes associated with it, eNodeB coordinating resources with other eNodeBs, etc.

The signaling described herein is either via direct links or logical links (e.g. via higher layer protocols and/or via one or more network and/or radio nodes). For example, signaling from a coordinating node may pass another network node, e.g., a radio network node.

The embodiments herein are not limited to LTE, but may apply with any Radio Access Network (RAN), single- or multi-RAT with or without carrier aggregation support. Some other RAT examples are LTE-Advanced, UMTS, HSPA, GSM, cdma2000, WiMAX, and WiFi.

The embodiments are applicable when doing measurement in a shared cell on an intra-frequency carrier, on inter-frequency carrier with or without gaps or on any multi-carrier system.

**Claims**

1. A method implemented by a measuring node in a wireless communication system (10), the method comprising:

   performing (210) positioning measurements at the measuring node on positioning signals that the measuring node receives from geographically separated transmission points, TPs, (20) of a shared cell during different respective positioning occasions offset in time, wherein the positioning signals are based on the same cell identifier;

   at the measuring node, associating (220) a result of each measurement with the cell identifier as well as information indicating the timing of each positioning occasion during which the measuring node received a respective positioning signal used for that measurement; the method being **characterized by:**

   performing positioning measurements at the measuring node on positioning signals that the measuring node receives from other geographically separated TPs (20) of the shared cell during positioning occasions that are not offset in time, when a distance and/or transmit time misalignment between said other TPs (20) is below a threshold, and

   determining (230) at the measuring node, or assisting another node in determining, a target device's position based on the results of the measurements and said association.

2. The method of claim 1, wherein said assisting comprises reporting to said another node the result of each measurement, as associated with the cell identifier and said information.

3. The method of any of claims 1-2, further **characterized by** receiving (205) positioning assistance data indicating whether and/or which TPs (20) in the shared cell are transmitting positioning signals based on the same cell identifier but during different positioning occasions offset in time.

4. The method of any of claims 1-3, further **characterized by** receiving (205) positioning assistance data indicating the timing of the positioning occasions during which the positioning signals are to be received from the TPs (20), and wherein said performing comprises performing the positioning measurements according to said positioning assistance data.

5. The method of any of claims 1-4, further **characterized by** deriving the timing of the positioning occasions from one or more predefined rules.

6. The method of claim 5, wherein said deriving comprises deriving a starting time of at least one of said positioning occasions as being a predefined timing offset from a predefined reference time.

7. The method of claim 6, wherein said deriving the starting time comprises deriving the predefined timing offset and/or the predefined reference time as a function of
   a number of TPs (20) in the shared cell transmitting the positioning signals, and
   the periodicity of the positioning signals.

8. The method of any of claims 1-7, wherein the wireless communication system (10) is a Long Term Evolution, LTE, system, wherein positioning signals are Positioning Reference Signals, PRS, wherein the cell identifier is a physical cell identifier, and wherein positioning measurements performed on the positioning signals are timing measurements.

9. The method of claim 8, wherein said timing measurements are reference signal time difference, RSTD, measurements or Rx-Tx measurements, and wherein the timing of a positioning occasion is represented as a PRS configuration index or a PRS subframe offset.

10. A measuring node for use in a wireless communication system (10), wherein the measuring node is configured to:

    perform positioning measurements on positioning signals that the measuring node receives from geographically separated transmission points, TPs, (20) of a shared cell during different respective positioning occasions offset in time, wherein the positioning signals are based on the same cell identifier;

    associate a result of each measurement with the cell identifier as well as information indicating the timing of each positioning occasion during which the measuring node received a respective positioning signal used for that measurement; and **characterized by** being configured to:

    perform positioning measurements at the measuring node on positioning signals that the measuring node receives from other geographically separated TPs (20) of the shared cell during positioning occasions that are not offset in time, when a distance and/or transmit time misalignment between said other TPs (20) is below a threshold, and determine at the measuring node, or assist another node in determining, a target device's position based on the results of the measurements and said association.

11. The measuring node of claim 10, configured to perform the method of any of claims 2-9.

12. A computer program comprising instructions, which when executed on at least one processor of a measuring node, cause the measuring node to carry out the method according to any of claims 1-9.

13. A carrier containing the computer program of claim 12 wherein the carrier is one of an electrical signal, an optical signal, a radio signal, or a computer readable storage medium.

**Patentansprüche**

1. Verfahren, das von einem Messknoten in einem drahtlosen Kommunikationssystem (10) implementiert wird, wobei das Verfahren Folgendes umfasst:

Durchführen (210) von Positionierungsmessungen am Messknoten an Positionierungssignalen, die der Messknoten während verschiedener jeweiliger Positionierungsereignisse, die zeitversetzt sind, von geografisch getrennten Übertragungspunkten, TPs, (20) einer gemeinsam verwendeten Zelle empfängt, wobei die Positionierungssignale auf derselben Zellkennung basieren;
am Messknoten Verknüpfen (220) eines Ergebnisses jeder Messung mit der Zellkennung sowie mit Informationen, die den Zeitpunkt jedes Positionierungsereignisses anzeigen, während dem der Messknoten ein jeweiliges Positionierungssignal, das für diese Messung verwendet wird, empfängt; wobei das Verfahren durch Folgendes gekennzeichnet ist:

Durchführen von Positionierungsmessungen am Messknoten an Positionierungssignalen, die der Messknoten während Positionierungsereignissen, die nicht zeitversetzt sind, von anderen geografisch getrennten TPs (20) der gemeinsam verwendeten Zelle empfängt, wenn eine Distanz und/oder eine Übertragungszeitfehlausrichtung zwischen den anderen TPs (20) unter einem Schwellwert liegt, und
Bestimmen (230) am Messknoten oder Unterstützen eines anderen Knotens beim Bestimmen einer Position einer Zielvorrichtung auf Basis der Ergebnisse der Messungen und der Verknüpfung.

2. Verfahren nach Anspruch 1, wobei das Unterstützen das Melden des Ergebnisses jeder Messung, wie mit der Zellkennung und den Informationen verknüpft, an den anderen Knoten umfasst.

3. Verfahren nach einem der Ansprüche 1-2, das ferner durch das Empfangen (205) von Positionierungsunterstützungsdaten gekennzeichnet ist, die anzeigen, ob und/oder welche TPs (20) in der gemeinsam verwendeten Zelle auf Basis derselben Zellkennung, aber während verschiedener Positionierungsereignisse, die zeitversetzt sind, Positionierungssignale übertragen.

4. Verfahren nach einem der Ansprüche 1-3, das ferner durch das Empfangen (205) von Positionierungsunterstützungsdaten gekennzeichnet ist, die den Zeitpunkt der Positionierungsereignisse anzeigen, während der die Positionierungssignale von den TPs (20) empfangen werden sollen, und wobei das Durchführen das Durchführen der Positionierungsmessungen gemäß den Positionierungsunterstützungsdaten umfasst.

5. Verfahren nach einem der Ansprüche 1-4, das ferner durch das Ableiten des Zeitpunkts der Positionierungsereignisse aus einer oder mehreren vordefinierten Regeln gekennzeichnet ist.

6. Verfahren nach Anspruch 5, wobei das Ableiten das Ableiten einer Startzeit von mindestens einem der Positionierungsereignisse umfasst, bei der es sich um einen vordefinierten Zeitpunktversatz von einer vordefinierten Referenzzeit handelt.

7. Verfahren nach Anspruch 6, wobei das Ableiten der Startzeit das Ableiten des vordefinierten Zeitpunktversatzes und/oder der vordefinierten Referenzzeit als eine Funktion von Folgendem umfasst:

einer Anzahl von TPs (20) in der gemeinsam verwendeten Zelle, die die Positionierungssignale übertragen, und
der Periodizität der Positionierungssignale.

8. Verfahren nach einem der Ansprüche 1-7, wobei das drahtlose Kommunikationssystem (10) ein Long Term Evolution(LTE)-System ist, wobei Positionierungssignale Positionierungsreferenzsignale, PRS, sind, wobei die Zellkennung eine physische Zellkennung ist und wobei Positionierungsmessungen, die an den Positionierungssignalen durchgeführt werden, Zeitpunktmessungen sind.

9. Verfahren nach Anspruch 8, wobei die Zeitpunktmessungen Referenzsignalzeitdifferenz(RSTD)-Messungen oder Rx-Tx-Messungen sind und wobei die Zeit eines Positionierungsereignisses als ein PRS-Auslegungsindex oder ein PRS-Unterrahmenversatz repräsentiert ist.

10. Messknoten zur Verwendung in einem drahtlosen Kommunikationssystem (10), wobei der Messknoten zu Folgendem ausgelegt ist:

Durchführen von Positionierungsmessungen an Positionierungssignalen, die der Messknoten während verschiedener jeweiliger Positionierungsereignisse, die zeitversetzt sind, von geografisch getrennten Übertragungspunkten, TPs, (20) einer gemeinsam verwendeten Zelle empfängt, wobei die Positionierungssignale auf derselben Zellkennung basieren;
Verknüpfen eines Ergebnisses jeder Messung mit der Zellkennung sowie mit Informationen, die den Zeitpunkt jedes Positionierungsereignisses anzeigen, während dem der Messknoten ein jeweiliges Positionierungssignal, das für diese Messung verwendet wird, empfängt; und **dadurch gekennzeichnet, dass** er zu Folgendem ausgelegt ist:

Durchführen von Positionierungsmessungen am Messknoten an Positionierungssignalen, die der Messknoten während Positionierungsereignissen, die nicht zeitversetzt sind, von anderen geografisch getrennten TPs (20) der gemeinsam verwendeten Zelle empfängt, wenn eine Distanz und/oder eine Übertragungszeitfehlausrichtung zwischen den anderen TPs (20) unter einem Schwellwert liegt, und
Bestimmen am Messknoten oder Unterstützen eines anderen Knotens beim Bestimmen einer Position einer Zielvorrichtung auf Basis der Ergebnisse der Messungen und der Verknüpfung.

11. Messknoten nach Anspruch 10, der dazu ausgelegt ist, das Verfahren nach einem der Ansprüche 2-9 durchzuführen.

12. Computerprogramm, das Anweisungen umfasst, die, wenn sie auf mindestens einem Prozessor eines Messknotens ausgeführt werden, bewirken, dass der Messknoten das Verfahren nach einem der Ansprüche 1-9 durchführt.

13. Träger, der das Computerprogramm nach Anspruch 12 enthält, wobei der Träger eines von einem elektrischen Signal, einem optischen Signal, einem Funksignal oder einem computerlesbaren Speichermedium ist.

## Revendications

1. Procédé mis en oeuvre par un noeud de mesure dans un système de communication sans fil (10), le procédé comprenant les étapes ci-dessous consistant à :

mettre en oeuvre (210) des mesures de positionnement au niveau du noeud de mesure sur des signaux de positionnement que le noeud de mesure reçoit en provenance de points de transmission géographiquement séparés, TP, (20) d'une cellule partagée au cours de différentes occasions de positionnement respectives décalées dans le temps, dans lequel les signaux de positionnement sont basés sur le même identificateur de cellule ;
au niveau du noeud de mesure, associer (220) un résultat de chaque mesure à l'identificateur de cellule ainsi qu'à des informations indiquant la temporisation de chaque occasion de positionnement au cours de laquelle le noeud de mesure a reçu un signal de positionnement respectif utilisé pour cette mesure ; le procédé étant **caractérisé par** les étapes ci-dessous consistant à :

mettre en oeuvre des mesures de positionnement au niveau du noeud de mesure sur des signaux de positionnement que le noeud de mesure reçoit en provenance d'autres points TP géographiquement séparés (20) de la cellule partagée au cours d'occasions de positionnement qui ne sont pas décalées dans le temps, lorsqu'une distance et/ou un désalignement de temps de transmission entre lesdits autres points TP (20) est inférieur(e) à un seuil ; et
déterminer (230) au niveau du noeud de mesure, ou assister un autre noeud dans le cadre de la détermination de la position d'un dispositif cible, sur la base des résultats des mesures et de ladite association.

2. Procédé selon la revendication 1, dans lequel ladite étape d'assistance consiste à rendre compte, audit autre noeud, du résultat de chaque mesure, tel qu'associé à l'identificateur de cellule et auxdites informations.

3. Procédé selon l'une quelconque des revendications 1 à 2, **caractérisé en outre par** l'étape consistant à recevoir (205) des données d'assistance au positionnement indiquant si des points TP et/ou quels points TP (20) dans la cellule partagée transmettent des signaux de positionnement sur la base du même identificateur de cellule, mais au cours d'occasions de positionnement différentes décalées dans le temps.

4. Procédé selon l'une quelconque des revendications 1 à 3, **caractérisé en outre par** l'étape consistant à recevoir (205) des données d'assistance au positionnement indiquant la temporisation des occasions de positionnement au cours desquelles les signaux de positionnement doivent être reçus en provenance des points TP (20), et dans lequel ladite étape de mise en oeuvre consiste à mettre en oeuvre les mesures de positionnement conformément auxdites données d'assistance au positionnement.

5. Procédé selon l'une quelconque des revendications 1 à 4, **caractérisé en outre par** l'étape consistant à dériver la temporisation des occasions de positionnement à partir d'une ou plusieurs règles prédéfinies.

6. Procédé selon la revendication 5, dans lequel ladite étape de dérivation consiste à dériver un temps de départ d'au moins l'une desdites occasions de positionnement comme étant un décalage de temporisation prédéfini par rapport à un temps de référence prédéfini.

7. Procédé selon la revendication 6, dans lequel ladite étape de dérivation du temps de départ consiste à dériver le décalage de temporisation prédéfini et/ou le temps de référence prédéfini en fonction :

   d'un nombre de points TP (20) dans la cellule partagée transmettant les signaux de positionnement ; et
   de la périodicité des signaux de positionnement.

8. Procédé selon l'une quelconque des revendications 1 à 7, dans lequel le système de communication sans fil (10) est un système de technologie d'évolution à long terme, LTE, dans lequel les signaux de positionnement sont des signaux de référence de positionnement, PRS, dans lequel l'identificateur de cellule est un identificateur de cellule physique, et dans lequel les mesures de positionnement mises en oeuvre sur les signaux de positionnement sont des mesures de temporisation.

9. Procédé selon la revendication 8, dans lequel lesdites mesures de temporisation sont des mesures de différence de temps de signal de référence, RSTD, ou des mesures de temps de réception-transmission, Rx-Tx, et dans lequel la temporisation d'une occasion de positionnement est représentée sous la forme d'un indice de configuration de signal PRS ou d'un décalage de sous-trame de signal PRS.

10. Noeud de mesure destiné à être utilisé dans un système de communication sans fil (10), dans lequel le noeud de mesure est configuré de manière à :

    mettre en oeuvre des mesures de positionnement sur des signaux de positionnement que le noeud de mesure reçoit en provenance de points de transmission géographiquement séparés, TP, (20) d'une cellule partagée au cours de différentes occasions de positionnement respectives décalées dans le temps, dans lequel les signaux de positionnement sont basés sur le même identificateur de cellule ;
    associer un résultat de chaque mesure à l'identificateur de cellule ainsi qu'à des informations indiquant la temporisation de chaque occasion de positionnement au cours de laquelle le noeud de mesure a reçu un signal de positionnement respectif utilisé pour cette mesure ; et **caractérisé en ce qu'**il est configuré de manière à :

    mettre en oeuvre des mesures de positionnement au niveau du noeud de mesure sur des signaux de positionnement que le noeud de mesure reçoit en provenance d'autres points TP géographiquement séparés (20) de la cellule partagée au cours d'occasions de positionnement qui ne sont pas décalées dans le temps, lorsqu'une distance et/ou un désalignement de temps de transmission entre lesdits autres points TP (20) est inférieur(e) à un seuil ; et
    déterminer au niveau du noeud de mesure, ou assister un autre noeud dans le cadre de la détermination de la position d'un dispositif cible, sur la base des résultats des mesures et de ladite association.

11. Noeud de mesure selon la revendication 10, configuré de manière à mettre en oeuvre le procédé selon l'une quelconque des revendications 2 à 9.

12. Programme informatique comprenant des instructions qui, lorsqu'elles sont exécutées sur au moins un processeur d'un noeud de mesure, amènent le noeud de mesure à mettre en oeuvre le procédé selon l'une quelconque des revendications 1 à 9.

13. Support contenant le programme informatique selon la revendication 12, dans lequel le support est l'un parmi un signal électrique, un signal optique, un signal radio ou un support de stockage lisible par ordinateur.

**FIG. 1**

**FIG. 2**

100

Obtain a configuration for transmitting a positioning signal from the TP based on the same cell identifier as that based on which one or more other TPs in the shared cell transmit a positioning signal, but during a different positioning occasion offset in time from that during which the one or more other TPs in the shared cell transmit a positioning signal
<u>110</u>

Transmit the positioning signal from the TP according to the obtained configuration
<u>120</u>

*FIG. 3*

**FIG. 4**

200

Receive positioning assistance data
205

Perform positioning measurements at the measuring node on positioning signals that the measuring node receives from geographically separated TPs of a shared cell during different respective positioning occasions offset in time, wherein the positioning signals are based on the same cell identifier
210

At the measuring node, associate a result of each measurement with the cell identifier as well as information indicating the timing of each positioning occasion during which the measuring node received a respective positioning signal used for that measurement
220

Determine at the measuring node, or assist another node in determining, a target device's position based on the results of the measurements and the association
230

*FIG. 5*

FIG. 6

300

Obtain the results of positioning measurements that a measuring node performed on positioning signals received from geographically separated TPs of a shared cell during different respective positioning occasions offset in time, wherein the positioning signals are based on the same cell identifier and wherein the result of each measurement is associated with that cell identifier as well as information indicating the timing of each positioning occasion during which the measuring node received a respective positioning signal used for the measurement
310

Uniquely identify which TPs of the shared cell transmitted which positioning signals, based on the timing of the positioning occasions
320

Determine a target device's position based on the identification
330

*FIG. 7*

400

Generate positioning assistance data indicating at least one of:
- the timing of positioning occasions during which a measuring node is to receive positioning signals from geographically separated TPs of a shared cell for performing positioning measurements thereon, the timing indicating that the positioning occasions are offset in time from one another
- whether and/or which TPs in the shared cell are transmitting positioning signals based on the same cell identifier but during different positioning occasions offset in time
<u>410</u>

Transmit the positioning assistance data to the measuring node
<u>420</u>

*FIG. 8*

FIG. 9

FIG. 10

One and two PBCH antenna ports

*FIG. 11*

PERIOD OF $T_{prs}$ SUBFRAMES

$N_{PRS}$ = 6 CONSECUTIVE SUBFRAMES (ONE POSITIONING OCCASSION)

*FIG. 12*

macro node

RRH

cell-id 1

macro cell
cell-id 1

cell-id 1

cell-id 1

*FIG. 13*

EP 3 033 913 B1

*FIG. 14*

FIG. 15

Time

Time

Time

PRS occasion in TP1

PRS periodicity

PRS occasion in TP2

PRS periodicity

PRS occasion in TP3

PRS periodicity

T1= PRS occasion start time

T2= PRS occasion start time

T3= PRS occasion start time

*FIG. 16*

Measuring Node 28

| MEMORY | CONTROL AND | TRANSCEIVER |
| 34 | PROCESSING CIRCUITS | CIRCUITS |
|  | 30 | 32 |

**FIG. 17**

Network Node
36

MEMORY
44

CONTROL AND
PROCESSING
CIRCUITS
38

NETWORK
INTERFACE
CIRCUITS
40

TRANSCEIVER
CIRCUITS
42

*FIG. 18*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110105144 A1

- US 20110105144 A